# EUROPÄISCHE PATENTANMELDUNG

(11) **EP 2 363 625 A1**
(43) Veröffentlichungstag der Anmeldung: **07.09.2011**
(21) Anmeldenummer: 11001669.8
(22) Anmeldetag: 01.03.2011
(51) Int. Cl.: F16L 3/10

(54) **Vorrichtung zur Halterung länglicher Gegenstände**

(30) Priorität: 04.03.2010 DE 202010003139 U
(71) Anmelder: Viktor Gresser GmbH, 93055 Regensburg (DE)
(72) Erfinder: Gresser, Viktor, 93127 Ramspau (DE)
(74) Vertreter: Glück, Martin

(57) **Zusammenfassung**

Die Erfindung betrifft eine Vorrichtung zur Halterung länglicher Gegenstände, insbesondere Rohre oder Schläuche bestehend aus einem Grundelement (2) mit zumindest einer Aufnahmeausnehmung (2.1, 2.1'), zumindest einem den zu halternden Gegenstand zumindest teilweise umfangsseitig umgebenden, in der Aufnahmeausnehmung (2.1, 2.1') angeordneten Halteelement (4, 4') und zumindest einem mit dem Grundelement (2) zusammenwirkenden, die Fixierung des Gegenstandes bewirkenden Schließelement (3, 3'). Besonders vorteilhaft ist das Halteelement (4, 4') mit dem Grundelement (2) und/oder dem Schließelement (3, 3') formschlüssig verbunden ist.

## Beschreibung

Die Erfindung betrifft eine Vorrichtung zur Halterung länglicher Gegenstände, insbesondere von Rohren oder Schläuchen gemäß dem Oberbegriff des Patentanspruches. 1.

Gattungsgemäße Haltevorrichtungen sind aus dem Stand der Technik hinreichend bekannt.

Insbesondere im Bereich der Lebensmittelindustrie, beispielsweise in Molkereien oder Brauereien werden an derartige Vorrichtungen spezielle Anforderungen gestellt. So müssen zum einen die Auflagen der Lebensmittelhygieneverordnung erfüllt werden, zum anderen müssen die Vorrichtungen aber auch spezielle Unfallverhütungsvorschriften erfüllen, da die Rohre oder Schläuche oft in zugänglichen, häufig auch viel begangenen oder befahrenen Bereichen, beispielsweise entlang von Wegen innerhalb von Produktionsbereichen verlegt sind. Des Weiteren müssen die Vorrichtungen auch eine hohe Stabilität aufweisen, da innerhalb der Rohre oder Schläuche oft Flüssigkeiten oder Gase unter hohem Druck bzw. mit hoher Temperatur übertragen werden.

Ausgehend hiervon liegt der Erfindung die Aufgabe zugrunde, eine Vorrichtung zur Halterung länglicher Gegenstände anzugeben, die zum einen einfach zu montieren ist, zum anderen aber auch flexibel für unterschiedliche Gegenstandsgeometrien verwendbar ist und zudem eine effektive Halterung bzw. Fixierung des Gegenstands ermöglicht. Die Aufgabe wird ausgehend von einer Vorrichtung gemäß dem Oberbegriff des Patentanspruches 1 durch dessen kennzeichnende Merkmale gelöst.

Der wesentliche Aspekt der erfindungsgemäßen Vorrichtung zur Halterung länglicher Gegenstände, insbesondere Rohre oder Schläuche, die aus einem Grundelement mit einer Aufnahmeausnehmung, zumindest einem den zu halternden Gegenstand zumindest teilweise umfangsseitig umgebenden, in der Aufnahmeausnehmung angeordneten Halteelement und zumindest einem mit dem Grundelement zusammenwirkenden, die Fixierung des Gegenstandes bewirkenden Schließelement gebildet ist, besteht darin, dass das Halteelement mit dem Grundelement und/oder dem verbunden ist. Dadurch wird eine einfache und schnelle Montage ermöglicht, die zudem eine effektiven Halterung bzw. Fixierung des Gegenstands ermöglicht.

In einer bevorzugten Ausführungsform weist das Halteelement eine außenumfangsseitige Nut zum formschlüssigen Eingriff zumindest eines Teils des Grundelements und des Schließelements auf. Durch den formschlüssigen Eingriff wird ein geführtes Einschieben des Halteelements in das Grundelement ermöglicht, wodurch die Montage erleichtert wird.

Vorzugsweise weist das Halteelement zumindest eine Aufnahmeöffnung zur Aufnahme des zu halternden Gegenstands auf, die beabstandet zum Grundelement und zum Schließelement angeordnet ist. Durch diese Beabstandung wird eine thermische Isolation der erfindungsgemäßen Vorrichtung von dem zu halternden Gegenstand erreicht, so dass zum einen die Wärmeverluste minimiert werden können, zum anderen die Wärmeableitung in die tragenden Bauelemente reduziert wird und damit thermische Spannungen vermieden werden können.

Vorteilhaft erweist sich, dass das Halteelement einen Haltebereich ausbildet, dessen Breite größer ist als die Materialstärken des Grundelements und des Schließelements. Dadurch lässt sich auch bei nur geringen Materialstärken des Grundelements und des Schließelements ein effektiver Halt des zu halternden Gegenstands erreichen, da dieser großflächig am Halteelement aufliegt.

Weiterhin vorteilhaft erweist es sich, wenn die Materialstärken des Grundelements und des Schließelements gleich sind. In diesem Fall bilden das Grundelement und das Schließelement eine Ebene ohne Überstände, so dass sich keine im Hinblick auf die Lebensmittelhygiene unnötigen Überstände oder Vorsprünge ergeben.

Besonders bevorzugt ist das Grundelement U-förmig, C-förmig oder H-förmig ausgebildet und weist zumindest ein Schenkelpaar auf. Durch diese Formen wird eine zu drei Seiten hin begrenzte Aufnahmeausnehmung mit einer Einführöffnung gebildet, die durch das Einführen des Schließelements verschließbar ist, so dass in dem durch Grundelement und Schließelement begrenzten Bereich der zu halternde Gegenstand fixiert werden kann. Vorteilhafterweise ist das Grundelement zur Aufnahme mehrerer zu halternder Gegenstände ausgebildet ist. Die zu halternden Gegenstände werden mittels zumindest eines Distanzelements voneinander beabstandet fixiert, wobei dieses Distanzelement mit den in den Halteelementen vorgesehenen Nuten zumindest teilweise in formschlüssigem Eingriff steht. Dadurch können lediglich durch eine Modifikation des Grundelements mehrere Gegenstände beabstandet zueinander fixiert und gehalten werden, ohne Abänderungen an den übrigen Elementen der Vorrichtung vornehmen zu müssen.

Vorteilhafterweise ist das Distanzelement, das Schließelement und das Grundelement aus einem Flachmaterial gefertigt und alle diese Elemente weisen insbesondere die gleiche Materialstärke auf. Dadurch können die einzelnen Elemente zum einen sehr kostengünstig gefertigt werden, zum anderen bilden das Grundelement, das Schließelement und das Distanzelement zumindest im Wesentlichen eine Ebene ohne dass sich unnötige Überstände oder Vorsprünge ergeben.

Bevorzugt weist das Halteelement eine geringe thermische Leitfähigkeit auf und ist insbesondere aus einem Kunststoff oder einem Elastomer gebildet ist. Mittels dieser Materialien kann eine effektive Fixierung des zu halternden Gegenstands bei gleichzeitig niedriger thermischer Leitfähigkeit erreicht werden.

In einem bevorzugten Ausführungsbeispiel ist ein zumindest ein Schenkelpaar des Grundelements überspannendes Verbindungselement vorgesehen, das insbesondere eine radiale Klemmung des zu halternden Gegenstandes über das Schließelement bewirkt. Das Schließelement wird hierbei zwischen dem Verbindungselement und dem den Gegenstand umgebenden Halteelement eingespannt. Hierbei steht das Schließelement mit der einen Seite mit dem Halteelement formschlüssig im Eingriff, auf der gegenüberliegenden Seite werden Teilbereiche des Schließelements passgenau in Öffnungen oder in Ausnehmungen aufgenommen, so dass das Halteelement durch diese beidseitigen formschlüssigen Verbindungen fixiert ist.

Die Erfindung wird nachfolgend anhand von Ausführungsbeispielen im Zusammenhang mit den Figuren näher erläutert. Zudem ergeben sich Weiterbildungen, Vorteile und Anwendungsmöglichkeiten der Erfindung auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

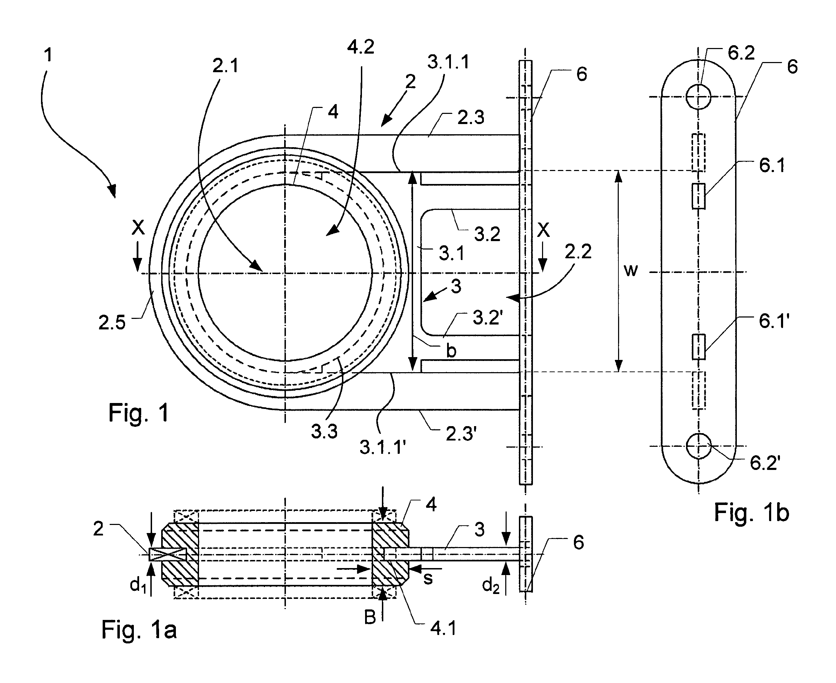

Es wird aber ausdrücklich darauf hingewiesen, dass die Erfindung keinesfalls auf die angegebenen Beispiele beschränkt sein soll. Es zeigen
- Fig. 1: beispielhaft eine Seitendarstellung eines ersten Ausführungsbeispiels einer erfindungsgemäßen Vorrichtung;
- Fig. 1 a: beispielhaft eine Schnittdarstellung entlang der Linie X-X der erfindungsgemäßen Vorrichtung gemäß Fig. 1
- Fig. 1 b: beispielhaft eine Draufsicht auf das Verbindungselement einer erfindungsgemäßen Vorrichtung.
- Fig. 2: beispielhaft ein Halteelement einer erfindungsgemäßen Vorrichtung in einer Seitenansicht;
- Fig. 2a: beispielhaft eine Schnittdarstellung entlang der Linie X-X eines Halteelements der erfindungsgemäßen Vorrichtung gemäß Fig. 2;
- Fig. 3: beispielhaft eine Seitendarstellung eines weiteren Ausführungsbeispiels einer erfindungsgemäßen Vorrichtung;
- Fig. 3a: beispielhaft eine Schnittdarstellung entlang der Linie X-X der erfindungsgemäßen Vorrichtung gemäß Fig. 3;
- Fig. 4: beispielhaft eine Seitendarstellung einer erfindungsgemäßen Vorrichtung zur zueinander parallelen und beabstandeten Halterung zweier Gegenstände;
- Fig. 4a: beispielhaft eine Schnittdarstellung entlang der Linie X-X der erfindungsgemäßen Vorrichtung gemäß Fig. 4;
- Fig. 4b: beispielhaft eine Draufsicht auf das Verbindungselement einer erfindungsgemäßen Vorrichtung.
- Fig. 5: beispielhaft eine Seitendarstellung einer erfindungsgemäßen Vorrichtung zur zueinander parallelen und beabstandeten Halterung mehrerer Gegenstände;
- Fig. 5a: beispielhaft eine Schnittdarstellung entlang der Linie X-X der erfindungsgemäßen Vorrichtung gemäß Fig. 5;

In Fig. 1 ist mit dem Bezugszeichen 1 eine erfindungsgemäße Vorrichtung zur Halterung länglicher Gegenstände, insbesondere Rohre oder Schläuche bezeichnet. Die mehrteilige Vorrichtung 1 besteht im Wesentlichen aus einem Grundelement 2 mit einer Aufnahmeausnehmung 2.1, einem in der Aufnahmeausnehmung 2.1 angeordneten Halteelement 4 und zumindest einem mit dem Grundelement 2 zusammenwirkenden, den vom Halteelement 4 zumindest teilweise umfangsseitig umschlossenen Gegenstand fixierenden Schließelement 3. Das Halteelement 4 weist in seinem Inneren eine Aufnahmeöffnung 4.2 auf, die zur Aufnahme des zu halternden Gegenstands ausgebildet ist. Das Einbringen des Halteelements 4 in die Aufnahmeausnehmung 2.1 des Grundelements 2 erfolgt über eine Einführöffnung 2.2.

Gemäß dem die Erfindung tragenden Gedanken ist das Halteelement 4 mit dem Grundelement 2 und/oder dem Schließelement 3, das die Einführöffnung 2.2 verschließt, formschlüssig verbunden. Dies bewirkt eine einfache und schnelle Montage und zudem eine effektive Halterung bzw. Fixierung des zu halternden Gegenstands.

Die formschlüssige Verbindung des Grundelements 2 oder des Schließelements 3 mit dem Halteelement 4 erfolgt im gezeigten Ausführungsbeispiel mittels einer außenumfangsseitigen Nut 4.1, die das Halteelement 4 vorzugsweise vollständig umspannt und deren Nuttiefe t kleiner ist als die Wandungsstärke s des Halteelements 4. Das Grundelement 2 und das Schließelement 3 umgeben das Halteelement 4 vorzugsweise vollständig, wobei Teilbereiche dieser Elemente 2, 3 radial in die Nut 4.1 eingreifen, so dass die Nut umfangsseitig nahezu vollständig ausgefüllt ist.

Das Grundelement in Fig. 1 ist U-förmig mit zwei Schenkeln 2.3, 2.3' ausgebildet, die zueinander parallel und beabstandet die Einführöffnung 2.2 seitlich begrenzen. Die Schenkel 2.3, 2.3' sind durch einen Verbindungsbereich 2.5, der insbesondere halbkreisförmig ausgebildet ist, verbunden. Die Schenkel 2.3, 2.3' und der Verbindungsbereich 2.5 begrenzen die Aufnahmeausnehmung 2.1. Vorzugsweise ist das Grundelement 2 ist aus einem metallischem Flachmaterial der Materialstärke d₁, insbesondere Edelstahl gebildet.

Das mit dem Grundelement 2 zusammenwirkende, die Fixierung des zu halternden Gegenstands bewirkende Schließelement 3 weist einen Führungs- und Eingriffsbereich 3.1 und vorzugsweise zwei Schenkel 3.2, 3.2' auf, die bei in das Grundelement 2 eingeführtem Schließelement 3 parallel und beabstandet zu den Schenkeln 2.3, 2.3' des Grundelements 2 verlaufen. Der Führungs- und Eingriffsbereich 3.1 ist im Bereich seiner zueinander parallelen Anlageflächen 3.1.1, 3.1.1' an die in Weite w der Einführöffnung 2.2 angepasst, d.h. der Abstand b dieser Anlageflächen 3.1.1, 3.1.1' zueinander entspricht näherungsweise der Weite w der Einführöffnung 2.2, so dass die Anlageflächen 3.1.1, 3.1.1' bei in die Einführöffnung 2.2 eingeführtem Schließelement 3 gegen die Innenseiten der Schenkel 2.3, 2.3' zur Anlage gelangen.

Zum Eingriff in die im Halteelement 4 vorgesehene Nut 4.1 weist der Führungs- und Eingriffsbereich 3.1 des Schließelements 3 eine konkave Ausnehmung 3.3 auf, die an die konvexe Wölbung der Nut 4.1 derart angepasst ist, dass der Führungs- und Eingriffsbereich 3.1 des Schließelements 3 näherungsweise über die gesamte Weite w der Aufnahmeausnehmung 2.1 mit der Nut 4.1 des Halteelements 4 in Eingriff steht.

Das Schließelement 3 ist vorzugsweise ebenfalls aus einem Flachmaterial der Materialstärke d₂ gebildet, wobei in einem besonders bevorzugten Ausführungsbeispiel die Materialstärke d₂ des Schließelements gleich der Materialstärke d₁ des Grundelements 2 ist. Die Materialstärken d₁, d₂ ist des Weiteren an die Breite b_{N} der Nut 4.1 angepasst, so dass ein passgenauer, formschlüssiger Eingriff des Grundelements 2, insbesondere im Bereich dessen Verbindungsbereiches 2.5 sowie des Führungs- und Eingriffsbereichs 3.1 des Schließelements 3 ermöglicht wird. Aufgrund der gleichen Materialstärken d₁, d₂ des Grundelements 2 und des Schließelements 3 kommen diese Elemente 2, 3 bei Eingriff in die Nut 4.1 des Halteelements 4 in einer Ebene zu liegen, ohne dass sich dabei Vorsprünge oder Überstände des Grundelements 2 über das Schließelement 3 oder umgekehrt ergeben. Das Schließelement 3 ist vorzugsweise ebenfalls aus einem Metall, insbesondere eines Edelmetalls gebildet.

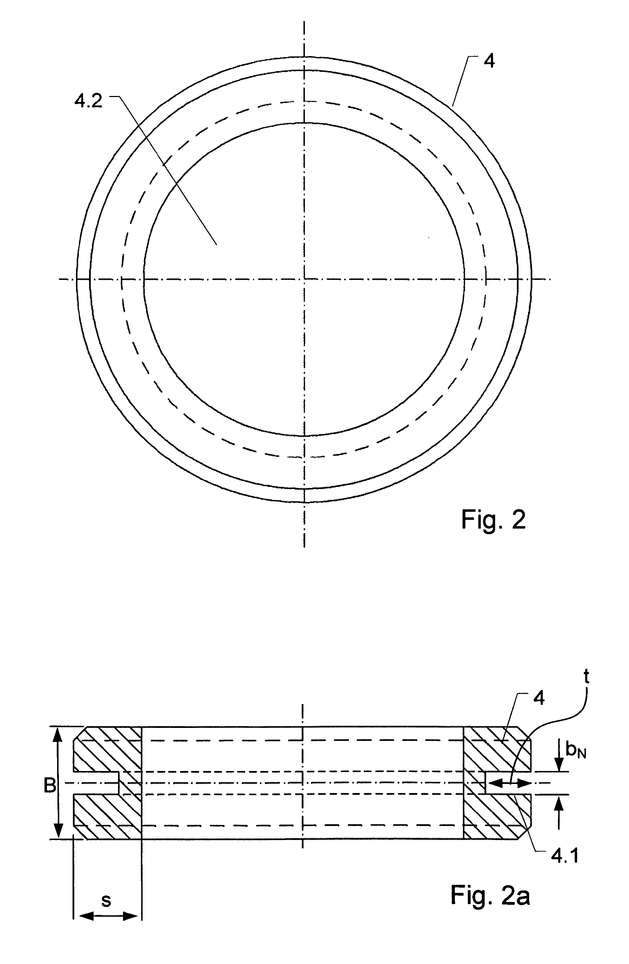

Das den zu halternden Gegenstand zumindest teilweise umgebende Halteelement 4 ist in den Figuren 2, 2a dargestellt. Im gezeigten Ausführungsbeispiel ist es ringförmig, insbesondere kreisringförmig ausgebildet und besitzt eine Aufnahmeöffnung 4.2, in welche der zu halternde Gegenstand einbringbar ist. Diese Aufnahmeöffnung 4.2 ist in Form und Größe an die Umfangsform der zu halternden Gegenstände angepasst und kann beliebige Formen, beispielsweise eine kreisrunde, ovale, oder polygone Querschnittsform haben. Hierbei kann, im Unterschied zum gezeigten Ausführungsbeispiel, auch die äußere Form des Halteelements 4 unterschiedlich zur Form der Aufnahmeöffnung 4.2 sein. So kann das Halteelement 4 beispielsweise selbst kreisrund sein, die Aufnahmeöffnung 4.2 polygon. Dadurch kann die erfindungsgemäße Vorrichtung 1 lediglich durch Austauschen bzw. durch Wahl eines für die Halterung des Gegenstands geeigneten Halteelements 4 zur Aufnahme unterschiedlich geformter Gegenstände adaptiert werden. Das Halteelement 4 ist im gezeigten Ausführungsbeispiel einteilig ausgebildet, d.h. bildet ein den zu halternden Gegenstand umfangsseitig vollständig umgebendes Element. Abweichend hiervon ist es jedoch möglich, das Halteelement 4 derart auszubilden, so dass das Halteelement 4 über den zu halternden Gegenstand aufsteckbar ist. Dies kann insbesondere durch eine mehrteilige Ausbildung des Halteelements 4 erfolgen.

Zur effektiveren Fixierung des zu halternden Gegenstands bildet das Halteelement 4 einen umfangsseitig den zu halternden Gegenstand vorzugsweise vollständig umschließenden Haltebereich der Breite B aus, wobei die Breite B die Materialstärken d₁, d₂ des Grundelements 2 bzw. des Schließelements 3 vorzugsweise um ein Vielfaches übersteigt (Fig. 1 a). Dadurch wird ein beidseitiger Überstand des Halteelements 4 seitlich, d.h. in axialer Richtung des zu halternden Gegenstandes über das Grundelement 2 bzw. das Schließelement 3 erreicht, so dass trotz einer geringen Materialstärke d₁, d₂ des Grundelements 2 bzw. des Schließelements 3 ein flächiger Haltebereich durch das Halteelement 4 erzielt wird. Durch den formschlüssigen Eingriff des Grundelements 2 und des Schließelements 3 in das Halteelement 4, insbesondere den Eingriff dieser Elemente in die außenumfangsseitig eingebrachte Nut 4.1 wird eine Verschiebung des Halteelements 4 gegenüber dem Schließelement 3 bzw. dem Grundelement 2 unterbunden. Mittels dieser außenumfangsseitig angeordneten Nut 4.1 ist das Halteelement 4 über die Einführöffnung 2.2 des Grundelements 2 in eben dieses einschiebbar, wobei durch den Eingriff der Schenkel 2.3, 2.3' des Grundelements 2 in diese Nut 4.1 ein geführtes Verschieben bewirkt wird.

Besonders bevorzugt wird der zu halternde Gegenstand durch das Halteelement 4 beabstandet zum Grundelement 2 und zum Schließelement 3 gehalten. Die beabstandete Halterung ergibt sich durch die Differenz aus der Wandungsstärke s des Halteelements 4 und der Nuttiefe t. Dies bewirkt eine thermische Trennung des zu halternden Gegenstands von dem Grundelement 2 bzw. dem Schließelement 3, so dass auch eine weitere Temperaturübertragung hin zu weiteren konstruktiven Bauteilen, an denen die erfindungsgemäße Vorrichtung 1 angebracht ist, unterbunden wird. Vorzugsweise wird das Halteelement 4 durch einen Kunststoff, insbesondere einen Elastomer mit geringer thermischer Leitfähigkeit gebildet, so dass die Wärmeübertragung zum Grundelement 2 bzw. zum Schließelement 3 zusätzlich minimiert wird.

Im Ausführungsbeispiel nach Fig. 1 weist die Vorrichtung zudem ein Verbindungselement 6 auf, dass das durch die Schenkel 2.3, 2.3' gebildete Schenkelpaar überspannt und vorzugsweise seitlich über diese Schenkel 2.3, 2.3' übersteht. Durch dieses Verbindungselement 6 wird insbesondere eine Klemmung des zu halternden Gegenstandes über das Schließelement 3 bewirkt und zwar derart, dass das Schließelement 3 durch das Verbindungselement 6 gegen das Halteelement 4 gedrückt und damit der zu halternde Gegenstand geklemmt wird. Die Verbindung zwischen dem Grundelement 2 und dem Verbindungselement 6 kann durch hinlänglich bekannte Verbindungstechniken, beispielsweise Verschrauben oder Verschweißen erfolgen. Die Verbindung zwischen dem Schließelement 3 und dem Verbindungselement 6 erfolgt vorzugsweise über eine Steckverbindung, wobei die Freiendseiten der Schenkel 3.2, 3.2' des Schließelements 3 in Öffnungen 6.1, 6.1' oder Ausnehmungen des Verbindungselements 6 zumindest teilweise eingesteckt sind. Aufgrund dieser Steckverbindung wird das Schließelement 3 zum einen an den freiendseitigen Enden der Schenkel 3.2, 3.2', zum anderen über die formschlüssige Verbindung mit dem Halteelement 4 fixiert, so dass das Schließelement 3 ausschließlich mittels der formschlüssigen Eingriffe des Führungs- und Eingriffsbereichs 3.1 in das Halteelement 4 und der freien Enden der Schenkel 3.2, 3.2' in das Verbindungselement 6 gesichert ist. Das Verbindungselement 6 weist zudem vorzugsweise zwei Bohrungen 6.2, 6.2' auf, mittels derer die Vorrichtung 1 durch Schraubverbindungen beispielsweise an einer Wand oder einem Trägerelement befestigt werden kann.

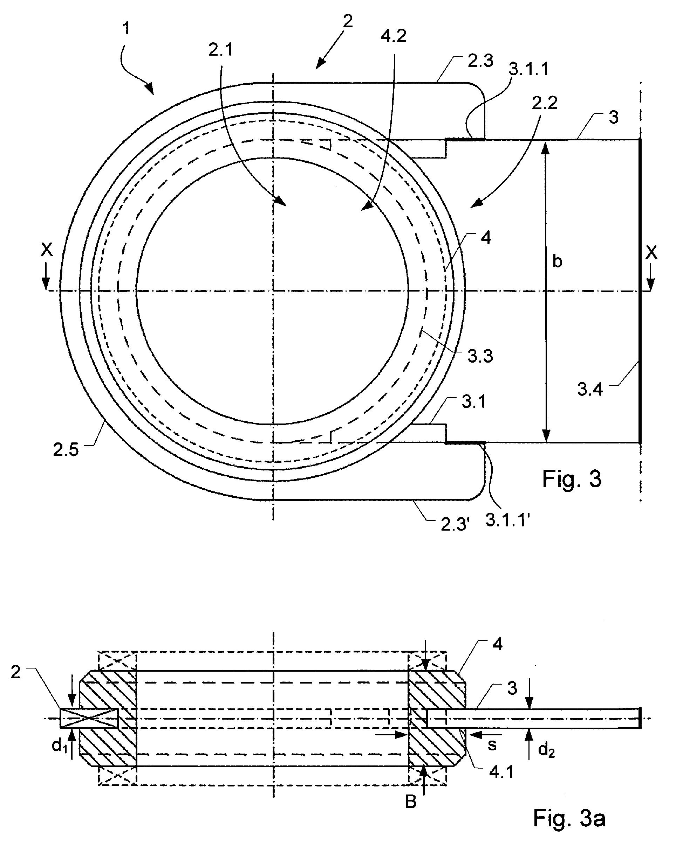

Fig. 3 zeigt ein zweites Ausführungsbeispiel der erfindungsgemäßen Vorrichtung 1. Der wesentliche Unterschied zu dem in Fig. 1 dargestellten Ausführungsbeispiel besteht darin, dass die Schenkel 2.3, 2.3' des Grundelements 2 kürzer ausgebildet sind, so dass das Grundelement 2 im wesentlichen C-förmig ist. Das die Einführöffnung 2.2 verschließende Schließelement 3 ist im Wesentlichen flächig ausgebildet und wird nach dem Einschieben in die Einführöffnung 2.2 und dem formschlüssigen Eingreifen in die umfangsseitige Nut 4.1 des Halteelements 4 mit dem Grundelement 2 an den Anlageflächen 3.1, 3.1' mit den Innenseiten der Schenkel 2.3, 2.3' verbunden, insbesondere verschweißt. Zudem ist in diesem Ausführungsbeispiel kein Verbindungselement 6 vorgesehen, sondern das Schließelement 3 wird mit dem der Ausnehmung 3.3 gegenüberliegenden Verbindungsbereich 3.4 mit einem Trägerelement oder einer Wandung verbunden, insbesondere verschweißt.

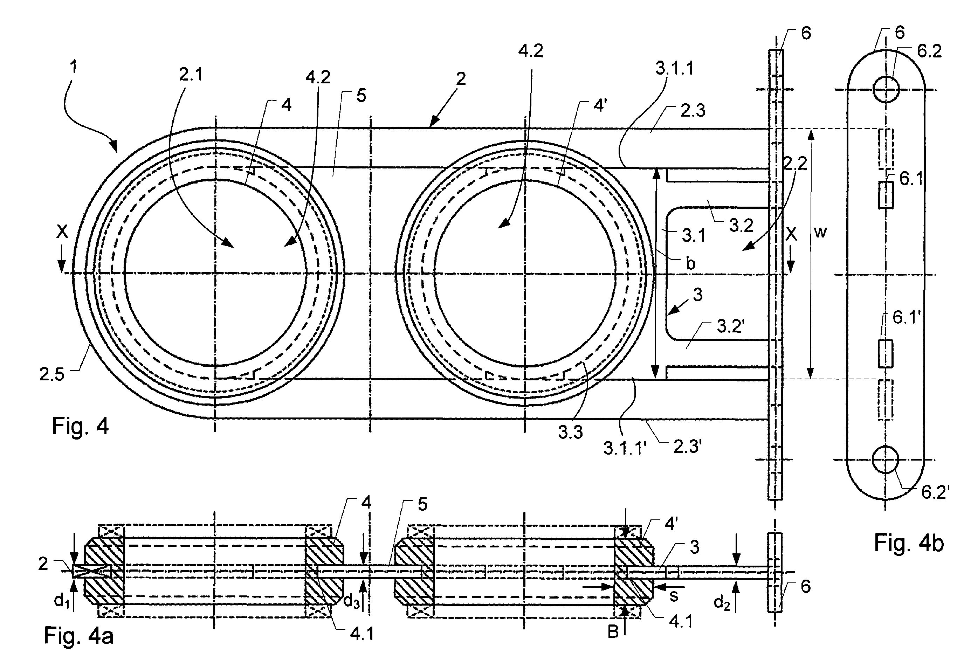

In Fig. 4 ist ein weiteres Ausführungsbeispiel der erfindungsgemäßen Vorrichtung 1 dargestellt, wobei dieses dem Aufbau nach näherungsweise gleich zum Ausführungsbeispiel der Fig. 1 ausgebildet ist. Der wesentliche Unterschied besteht in der Länge der Schenkel 2.3, 2.3' des Grundelements 2. Deren Länge ist derart gewählt, dass in der durch die Schenkel 2.3, 2.3' und dem Verbindungsbereich 2.5 begrenzten Aufnahmeausnehmung 2.1 mehrere Gegenstände, insbesondere zwei Gegenstände gehaltert werden können. Die einzelnen zu halternden Gegenstände werden wiederum von einem Halteelement 4, 4' zumindest teilweise umfangsseitig umgeben, wobei die Halteelemente 4, 4' durch deren außenumfangsseitig eingebrachte Nut 4.1 geführt in den Schenkeln 2.3, 2.3' in die Aufnahmeausnehmung 2.1 einschiebbar sind.

Um die zu halternden Gegenstände im Abstand zueinander fixieren zu können, ist zwischen den Halteelementen 4, 4' ein Distanzelement 5 vorgesehen, dessen Anlageflächen 5.1, 5.1' gegenüber den Innenseiten der Schenkel 2.3, 2.3' zur Anlage gelangen. Zudem weist das Distanzelement 5 an zwei gegenüberliegenden Seiten je eine Ausnehmung 5.2, 5.2' auf, deren konkave Wölbung an die konvexe Wölbung der Kontur der Nut 4.1 angepasst ist. Das Distanzelement 5 weist damit eine kelchförmige bzw. im Wesentlichen kelchförmige Grundform auf.

Bevorzugt ist das Distanzelement 5 ebenfalls aus einem metallischen Flachmaterial, insbesondere aus einem Edelstahlflachmaterial hergestellt, dessen Materialstärke d₃ gleich den Materialstärken d₁, d₂ des Grundelements bzw. des Schließelements 3 ist. Damit kommen das Grundelement 2, das Schließelement 3 und das Distanzelement 5 im zusammengesetzten Zustand der Vorrichtung in einer Ebene zu liegen, ohne dass sich Überstände eines oder mehrerer Elemente gegenüber den anderen Elementen ergeben.

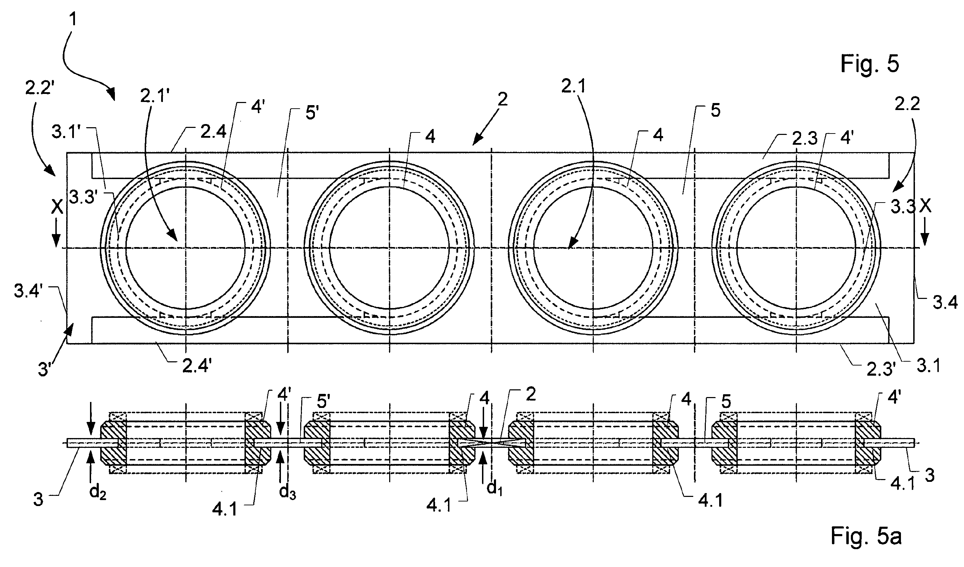

Figuren 5, 5a zeigen ein weiteres Ausführungsbeispiel der erfindungsgemäßen Vorrichtung 1. Diese Vorrichtung 1 ist zur Halterung von mehreren, insbesondere vier Gegenständen ausgebildet. Hierzu ist das Grundelement 2 H-förmig ausgebildet mit zwei Paaren von Schenkeln 2.3, 2.3', 2.4, 2.4', wobei jeweils zwei dieser Schenkel 2.3, 2.3', 2.4, 2.4' eine Aufnahmeausnehmung 2.1, 2.1' begrenzen. In diese Aufnahmeausnehmungen 2.1, 2.1' ist über Einführöffnungen 2.2, 2.2' der zu halternde Gegenstand bzw. die zu halternden Gegenstände in das Grundelement einführbar. Vorzugsweise werden in den Aufnahmeausnehmungen 2.1, 2.1' jeweils ein Paar von Gegenständen gehalten und zwar durch zueinander beabstandete Halteelemente 4, 4', wobei die in der jeweiligen Aufnahmeausnehmung 2.1, 2.1' aufgenommenen Halteelemente 4, 4' durch ein Distanzelement 5 beabstandet werden. Das Distanzelement 5 ist hierbei gleich dem Distanzelement 5 der Fig. 4 ausgebildet, so dass die dort erläuterten Merkmale des Distanzelements 5 auch hier Gültigkeit haben.

Die einander vorzugsweise gegenüberliegenden Einführöffnungen 2.2, 2.2' werden wiederum über Schließelemente 3, 3' verschlossen. Diese Schließelemente 3, 3' weisen ebenfalls je einen Führungs- und Eingriffsbereich 3.1, 3.1' auf, der eine konkave Ausnehmung 3.3, 3.3' zum Einschieben in die Nut 4.1 der Halteelemente 4' trägt. Der Verbindungsbereich 3.4, 3.4' bildet den seitlichen Abschluss der Vorrichtung 1 zu beiden Seiten hin, wobei der Verbindungsbereich 3.4, 3.4' seitliche Überstände aufweist, die die Stirnseiten der Schenkel 2.3, 2.3', 2.4, 2.4' überdecken und bündig mit den Außenseiten der Schenkel 2.3, 2.3', 2.4, 2.4' abschließen.

Das Grundelement 2, die Distanzelemente 5, 5' und die Schließelemente 3, 3' sind wiederum vorzugsweise aus einem Flachmaterial gebildet, wobei die Materialstärken d₁, d₂, d₃ dieser Elemente 2, 3, 3', 5, 5' gleich sind.

Die Erfindung wurde voranstehend an einem Ausführungsbeispiel beschrieben. Es versteht sich, dass zahlreiche Modifikationen und Änderungen der Erfindung möglich sind, ohne dass hierdurch der Erfindungsgedanke verlassen wird.

### Bezugszeichenliste

- 1: Haltevorrichtung
- 2: Grundelement
- 2.1, 2.1': Aufnahmeausnehmung
- 2.2, 2.2': Einführöffnung
- 2.3, 2.3': Schenkelpaar
- 2.4, 2.4': Schenkelpaar
- 2.5: Verbindungsbereich
- 3, 3': Schließelement
- 3.1: Führungs- und Eingriffsbereich
- 3.1.1, 3.1.1': Anlagefläche
- 3.2, 3.2': Schenkel
- 3.3, 3.3': Ausnehmung
- 3.4, 3.4': Verbindungsbereich
- 4, 4': Halteelement
- 4.1: Nut
- 4.2: Aufnahmeöffnung
- 5, 5': Distanzelement
- 5.1,5.1': Anlagefläche
- 5.2, 5.2': Ausnehmung
- 6: Verbindungselement
- 6.1, 6.1': Öffnung
- 6.2, 6.2': Bohrung

- B: Breite
- b: Abstand
- b_{N}: Breite der Nut
- d₁, d₂, d₃: Materialstärke
- s: Wandungsstärke
- t: Nuttiefe
- w: Weite

## Patentansprüche

1. Vorrichtung zur Halterung länglicher Gegenstände, insbesondere Rohre oder Schläuche bestehend aus einem Grundelement (2) mit zumindest einer Aufnahmeausnehmung (2.1, 2.1'), zumindest einem den zu halternden Gegenstand zumindest teilweise umfangsseitig umgebenden, in der Aufnahmeausnehmung (2.1, 2.1') angeordneten Halteelement (4, 4') und zumindest einem mit dem Grundelement (2) zusammenwirkenden, die Fixierung des Gegenstandes bewirkenden Schließelement (3, 3'), **dadurch gekennzeichnet, dass** das Halteelement (4, 4') mit dem Grundelement (2) und/oder dem Schließelement (3, 3') formschlüssig verbunden ist.

2. Vorrichtung nach Anspruch 1, **dadurch gekennzeichnet, dass** das Halteelement (4, 4') eine außenumfangsseitige Nut (4.1) zum formschlüssigen Eingriff zumindest eines Teils des Grundelements (2) und des Schließelements (3, 3') aufweist.

3. Vorrichtung nach Anspruch 1 oder 2, **dadurch gekennzeichnet, dass** das Halteelement (4, 4') zumindest eine Aufnahmeöffnung (4.2) zur Aufnahme des zu halternden Gegenstands aufweist, die beabstandet zum Grundelement (2) und zum Schließelement (3, 3') angeordnet ist.

4. Vorrichtung nach einem der vorhergehenden Ansprüche, **dadurch gekennzeichnet, dass** das Halteelement (4, 4') auswechselbar am Grundelement (2) angeordnet ist.

5. Vorrichtung nach einem der vorhergehenden Ansprüche, **dadurch gekennzeichnet, dass** das Halteelement (4, 4') einen Haltebereich der Breite (B) ausbildet, wobei die Breite (B) größer ist als die Materialstärken (d₁, d₂) des Grundelements (2) und des Schließelements (3, 3').

6. Vorrichtung nach einem der vorhergehenden Ansprüche, **dadurch gekennzeichnet, dass** die Materialstärken (d₁, d₂) des Grundelements (2) und des Schließelements (3, 3') gleich sind und/oder dass das Grundelement (2) zumindest ein Schenkelpaar (2.3, 2.3', 2.4, 2.4') aufweist, insbesondere U-förmig, C-förmig oder H-förmig ausgebildet ist.

7. Vorrichtung nach einem der vorhergehenden Ansprüche, **dadurch gekennzeichnet, dass** das Grundelement (2) zumindest eine Einführöffnung (2.2, 2.2') zum Einbringen des Halteelements (4, 4') aufweist und dass das Schließelement (3, 3') zum Verschließen der Einführöffnung (2.2, 2.2') ausgebildet ist.

8. Vorrichtung nach Anspruch 7, **dadurch gekennzeichnet, dass** das Halteelement (4, 4') über die Einführöffnung (2.2, 2.2') in das Grundelement (2) einschiebbar ist.

9. Vorrichtung nach einem der Ansprüche 2 bis 8, **dadurch gekennzeichnet, dass** das Halteelement (4, 4') mittels der Nut (4.1) geführt in der Aufnahmeausnehmung (2.1) des Grundelements (2) verschiebbar ist.

10. Vorrichtung nach einem der vorhergehenden Ansprüche, **dadurch gekennzeichnet, dass** das Grundelement (2) zur Aufnahme mehrerer zu halternder Gegenstände ausgebildet ist.

11. Vorrichtung nach Anspruch 10, **dadurch gekennzeichnet, dass** zwischen den zu halternden Gegenständen ein Distanzelement (5, 5') vorgesehen ist, das zur Beabstandung der Halteelemente (4, 4') ausgebildet sind.

12. Vorrichtung nach Anspruch 11, **dadurch gekennzeichnet, dass** das Distanzelement (5, 5') mit den in den Halteelementen (4, 4') vorgesehenen Nuten (4.1) zumindest teilweise in formschlüssigem Eingriff stehen und/oder dass das Distanzelement (5, 5'), das Schließelement (3, 3') und das Grundelement (2) die gleiche Materialstärke (d₁, d₂, d₃) aufweisen und/oder dass das Distanzelement (5, 5'), das Schließelement (3, 3') und das Grundelement (2) aus einem Flachmaterial gefertigt sind.

13. Vorrichtung nach einem der vorhergehenden Ansprüche, **dadurch gekennzeichnet, dass** das Halteelement (4, 4') eine geringe thermische Leitfähigkeit aufweist, insbesondere aus einem Kunststoff oder einem Elastomer gebildet ist.

14. Vorrichtung nach einem der Ansprüche 6 bis 13, **dadurch gekennzeichnet, dass** ein zumindest ein Schenkelpaar (2.3, 2.3') des Grundelements (2) überspannendes Verbindungselement (6) vorgesehen ist, das insbesondere eine Klemmung des zu halternden Gegenstandes über das Schließelement (3) bewirkt.

15. Vorrichtung nach Anspruch 14, **dadurch gekennzeichnet, dass** das Verbindungselement (6) zumindest eine Öffnung (6.1, 6.1') oder Ausnehmung zur Fixierung des Schließelements (3) aufweist.
